# EUROPEAN PATENT SPECIFICATION

(11) **EP 1 871 721 B1**
(45) Date of publication and mention of the grant of the patent: **18.11.2009**
(21) Application number: 06728263.2
(22) Date of filing: 11.04.2006
(51) Int. Cl.: C04B 24/08

(54) **EFFLORESCENCE CONTROL WITH WAX**
KONTROLLE VON AUSBLÜHUNGEN MIT WACHS
CONTROLE D'EFFLORESCENCE AVEC DE LA CIRE

(30) Priority: 12.04.2005 US 103498
(43) Date of publication of application: 02.01.2008
(73) Proprietor: H.A. Industrial Technologies Ltd, 69407 Tel Aviv (IL)
(72) Inventor: SHOSHANY, Haggai, 15241 Kfar Tavor (IL); SHOSHANI, Amnon, 69407 Tel Aviv (IL)
(74) Representative: Machtalère, Georges
(86) International application number: PCT/IL2006/000462
(87) International publication number: WO 2006/109309

(56) References cited:
- WO-A-2004/061042
- US-A- 4 368 077

## Description

The present invention relates generally to efflorescence, and particularly to using wax compositions and mixtures to control, reduce and eliminate efflorescence in concrete shaped products.

### BACKGROUND OF THE INVENTION

Efflorescence is a calcium or alkaline salt which forms as a blotchy, powdery or crystalline deposit on the surface of masonry and concrete products. It is due to moisture entering through the masonry, combining with the calcium hydroxide in the cement, and bringing the hydroxide to the surface in a solution which forms crystals when it combines with the carbon dioxide in the air. It is usually white but efflorescence may be yellow, green or brown.

Efflorescence is generally caused by salt-bearing compounds entering the masonry material. Although new, fresh bricks do not generally contain significant amounts of soluble salts, mortar and concrete do have relatively high soluble salt contents. Ground waters that are naturally salt-bearing can also seep into the masonry, as well as other sources of water, such as rain, lawn sprinklers, leaky pipes and others. The amount of efflorescence that occurs is related, *inter alia*, to the amount of water in the bricks, and their drying time. The more water in the bricks, and the longer it is there, the more chance salts will have to dissolve in it and be brought to the surface as the bricks dry out.

In the prior art, attempts to control efflorescence include waterproof coatings applied to the surface of the masonry units. The application of such coatings is not always effective and is costly in terms of labor, coating materials and time. One of the most common methods is to simply "give up" and brush off the efflorescence deposits with a stiff dry bristle brush after the wall has dried out.

US Patent 6,537,366 to Supplee, Sr. describes a composition for coloring concrete, which includes a hydrophobic efflorescence control agent, such as a stearate-containing compound. Supplee, Sr. states that although stearate-containing compounds (e.g., calcium stearate, zinc stearate, aluminum stearate, among other suitable compounds of stearic acid, salts and derivatives thereof, and mixtures thereof) may be used to minimize or eliminate efflorescence, they are also known to adversely affect the durability of concrete. Concrete durability is a function of the totality of the polymerization of the cementitious materials in a mix. Because efflorescence control agents hinder polymerization, use of efflorescence control agents yield a weaker polymer structure and hence a less durable concrete.

Supplee, Sr. describes a concrete admixture composition that includes about 0.1% by weight to about 85% by weight of a hydrophobic efflorescence control agent; about 0.5% by weight to about 75% by weight of a particulated polymer, the particulated polymer having particle sizes of about 50 angstroms to about 7,000 angstroms; and about 0.001% by weight to about 80% by weight of a colorant in an aqueous dispersion of the total weight of the composition. The composition also includes a property enhancing additive selected from the group consisting of plasticizers, surfactants, rheology modifiers, biological control agents, and a mixture thereof.

The efflorescence control agent may be one of the stearate-containing compounds mentioned above, or may be selected from the group consisting of tall oil fatty acids, vegetable and animal fats, emulsions based on white grease, silicone compounds, siliconates, and siloxanes, waxes, wax emulsions, soaps and fatty acids, vegetable oils and emulsions, petroleum residues, including mineral oil, paraffin, and bitumens, various pozzolanics, including fly ash, blast furnace slag, diatomaceous earth, inert fillers, including talc, bentonite, and siliceous powders, and a mixture thereof. The particulated polymer is selected from the group consisting of styrene-based polymers and copolymers, acrylic-based polymers and copolymers, polyvinyl acetates, polyepoxides, polyurethanes, butadiene rubbers, and a mixture thereof.

US Patent 4368077 to Ceska et al. discloses a process for preparing an improved concrete composition which comprises mixing Portland cement, aggregate, water and a latex composition comprising a latex of a polymer and a wax additive. However, no wax blend is contemplated.

### SUMMARY OF THE INVENTION

The present invention seeks to provide wax compositions and mixtures to control, reduce and eliminate efflorescence in concrete shaped products, as is described in detail further hereinbelow. Wax blend may be mixed with the raw materials of the concrete shaped product, resulting in a concrete shaped product with advanced hydrophobic properties (that is, water repelling or resisting, the terms being used interchangeably) that may solve the abovementioned problems of efflorescence.

Contrary to prior art, the present invention mixes a wax blend (instead of a single wax) with the concrete raw materials.

Although the invention is not limited to any theory, nevertheless the following is a non-limiting explanation of the differences between a single wax and wax blend that may explain the surprising results of the invention. Waxes vary in crystalline structure with molecular weight. The lower melting (soft) waxes tend to have large plate-like crystals while higher melting (hard) waxes tend to have needle-shape crystals. If the molecular weight is sufficiently high, the wax tends to be amorphous in nature. This is because the molecular structure is changing as well. The lower molecular weight waxes are mostly normal paraffin compounds and as molecular weight increases, the wax has less normal paraffin molecules and more isoparaffinic and ring compounds are present. When relatively soft waxes are blended with other relatively hard waxes, the result is a crystalline structure that can be very different than both single waxes. The wax blend changes the molecular structure and thus the crystalline structure and ultimately the desired performance of the material used in a given application. A single wax may not have a crystalline structure that provides the desired performance characteristic defined in the application. Wax blends are different than a single wax in structure and thus provide differences in performance characteristics than a single wax.

The differences may manifest themselves in a variety of qualities, such as appearance, strength, opacity, hydrophobicity, adhesiveness, cohesiveness, chemical resistance and others. Crystallization phenomena may explain the synergistic improvement of certain desired qualities (i.e. hydrophobicity, adhesion to the concrete particles, etc.) while maintaining other qualities desirably unchanged (e.g., processability appearance, etc).

Hard waxes tend to be more expensive, more hydrophobic, less adhesive and less processable than soft waxes. Wax blends that include a soft main wax and a hard secondary wax may enhance the desired qualities of both constituent waxes which can not be found in each of the ingredients alone in order to obtain a feasibly economical hydrophobic concrete shaped product.

When wax blends of the present invention are added to concrete mixtures, a synergy occurs. The wax blend has enhanced hydrophobicity which is close to the level of the secondary wax, while at the same time maintaining adhesion between the wax blend and the concrete at a level which is close to the level of the main wax. In addition, the processing ability of the wax blend is close to the level of the main wax. These qualities of wax blends enable controlling efflorescence with significantly reduced quantities of additives thus maintaining concrete qualities such as mechanical properties and durability.

### DETAILED DESCRIPTION OF EMBODIMENTS

The term "concrete shaped product" encompasses concrete products, such as but not limited to, bricks, blocks, tiles, columns, pillars, cinder blocks, pavers, interlocking bricks, blocks and tiles (also referred to as interlocking concrete pavers or pavement stones) which may be molded or otherwise formed into a desired shape. Forming and curing the concrete shaped product may be done at room (ambient) or near room temperature (even including arctic conditions), but may also be done at elevated temperatures (e.g., autoclave curing).

As is well known in the art, concrete is basically a mixture of two components, aggregates and paste. The aggregate component normally includes sand and gravel, pebbles or crushed stone. The paste component normally includes cementing materials, such as but not limited to, Portland cement with or without supplementary cementing materials, water, and air. Accordingly, the term "concrete mix" (or "concrete mixture") refers to the mixture of the aggregates and paste.

In accordance with an embodiment of the present invention, the concrete shaped product may be made resistant to efflorescence by adding a wax blend to the concrete mix. The wax blend may be in the form of an emulsion, suspension, solution, dispersion, melt (e.g., liquid above melt temperature poured, sprayed or misted), or small solid particles (e.g., flakes, powder, pellets, etc.) or any combination thereof.

A "wax solution" is a homogenous liquid of miscible materials in which wax is dissolved in a main solvent. The wax is in its molecular or ion form.

A "wax emulsion" is a stable dispersion of immiscible materials. It is noted that wax in water emulsions of above-micron size particles necessitate emulsifiers to maintain stability. The emulsifiers prevent the wax particles from adhering to or merging with themselves. Water soluble polymer compounds, such as but not limited to polyvinyl alcohol, may be added to the water phase, for the purpose of controlling the viscosity of the emulsion and improving the adhesion between the wax and other particles.

A "wax suspension" is a buoyant dispersion of immiscible materials. It is noted that wax in water suspensions necessitate constant agitation without which the wax particles will rapidly merge to form a continuous wax phase and a continuous water phase. Water soluble polymer compounds, such as but not limited to polyvinyl alcohol, may be added to the water phase, for the purpose of controlling the viscosity of the suspension and improving the adhesion between the wax and other particles.

"Mixing" encompasses adding, coating, dissolving, pouring, or any other action to make the wax substance part of the concrete mixture which is eventually turned into a finished concrete shaped product.

As is known in the art, certain shaped products, such as interlocking concrete pavers or cinder blocks, may be made with a base mix and a face mix, that is, two mixes are applied during the stone manufacture. The base mix is used to fill a mold to create the paver. Afterwards, the face mix is used to completely fill the mold prior to manufacture. The face mix (also referred to as hard facing) is a thin layer of fine aggregate and cement to the top surface of the concrete paver. The layer is often colored and is used to provide a more intense appearance, greater abrasion resistance, or provide a base for a textured finish. This enables the cost effective use of very special colors in manufacturing the paver.

It has been surprisingly found that when the concrete shaped product is manufactured using a base mix and a face mix, the concrete shaped product may be made resistant to efflorescence by adding a single wax or a wax blend substantially just to the face mix alone. Alternatively the wax blend may be mixed throughout the concrete shaped product.

The qualities of the wax blends, as opposed to the qualities of the same quantities of any single wax, enable the present invention to achieve efflorescence control without significantly changing the production process or the mechanical qualities of the final concrete shaped product.

The wax blend may include a weight ratio of 50.01% to 99.99% of a main wax, and 0.01% to 49.99% of a secondary wax. Preferable ratios are 75% to 99% of the main wax and 1% to 25% of the secondary wax. More preferable ratios are 85%-98% of the main wax and 2-15% of the secondary wax. Optionally, the wax blend may feature a ratio of main wax to secondary wax in a range of about 1:1 to about 50:1, preferably about 3:1 to about 30:1, more preferably about 5:1 to about 20:1.

In accordance with an embodiment of the present invention, the main wax may include a soft macro-crystalline wax (preferably, but not limited to, a soft paraffin wax) with a congealing/melting/softening point (the terms being used interchangeably) in the range of about 10-45°C, a hard macro-crystalline wax (preferably, but not limited to, a paraffin wax) with a congealing point in the range of about 40-85°C, or a mixture thereof. Other macro-crystalline waxes such as plant/insect waxes (bee wax, carnauba wax, candelila wax, bayberry wax, Japan wax, etc.) and synthetic waxes (wax produced from a Fischer-Tropsch process, polyethylene wax, polypropylene wax, etc.), or any mixture thereof may be used as the main wax.

The secondary wax may include a hard or micro-crystalline wax with a congealing point higher than 70°C, and preferably at least 10°C higher than that of the main wax. The secondary wax is preferably montan wax with a congealing point higher than 70°C, preferably in the range of about 70-95°C, more preferably 75-85°C. Other hard micro-crystalline waxes, such as but not limited to, natural waxes (peat wax, castor wax, jojoba wax, etc.) and synthetic waxes (wax produced from a paraffin precipitation process, Fischer-Tropsch process, polyethylene wax, polypropylene wax, etc.) or any mixture thereof may be used as the secondary wax.

For example, the main wax may be a macro-crystalline wax and the secondary wax may be montan wax. As another example, the main wax may be a paraffin macro-crystalline wax and the secondary wax may be a paraffin micro-crystalline wax.

In cases of ambient temperature curing of the concrete shaped product, the congealing point of the wax blend is preferably 5-15°C above the ambient temperature. In cases of autoclave curing of the concrete shaped product, the congealing point of the wax blend is preferably at least 10°C below the autoclave temperature.

The weight ratio of the wax blend to the total concrete weight is 0.1 % to 10%, preferably 0.3% to 5%, and more preferably 0.5% to 3%; optionally the weight ratio may be from about 0.2% to about 5% and preferably from about 0.25% to about 2.50%.

Although the invention encompasses wax in any form as stated above, it may be advantageous to add the wax as a suspension instead of an emulsion to the concrete mixture. Emulsions have to be stored at the site where the concrete shaped product is produced, and have a limited shelf life. The manufacture of emulsions uses relatively a lot of energy and is relatively costly. In contrast, the raw materials for making the suspension may be much cheaper and much more stable. The wax suspension may be manufactured at the site where the concrete shaped product is produced, and introduced on-line to the shaped product mixture, thereby providing significant savings in energy, storage, manpower, etc. Due to its online production, the wax suspension is not sensitive to storage and/or storage conditions, such as but not limited to, excessive mechanical shear, pumping, excessively low or high ambient temperature, storage agitation, crust formation, particles agglomeration, and the like.

The invention may be better understood by referring to the following non-limiting examples. Table "A" shows the main differences between the examples basic parameters, with the values being congealing point in °C.

**Table "A"**

| **No.** | **Treated part** | **main wax** | **Secondary wax** | **Rock type** |
|---|---|---|---|---|
| Example 1 | Face mix only | Hard (58°C) | Montan (82°C) | Basalt rock |
| Example 2 | Face mix only | Soft (45°C) | Montan (82°C) | Limestone rock |
| Example 3 | All the mix | Soft (45°C) | Montan (79°C) | Basalt rock |
| Example 4 | All the mix | Soft (45°C) | Montan (79°C) | Limestone rock |

### Example 1

### Test of Wax Blend on Concrete Interlocking Bricks

Standard mixtures of pavers were made from crushed basalt rock, sand, Portland cement and water. A suspension of wax blend was added in various quantities to the face mix only. The base mix was not treated. The wax blend included paraffin wax of congealing point 58°C and montan wax of congealing point 82°C.

The pavers were cured in an ambient temperature 100% humidity chamber for 12 hours and in ambient temperature outdoor storage for 28 days.

Wax blend addition rates and test results of these pavers are shown in Table 1. The ratio of the main wax to the secondary wax ranged about 20:1. The actual amount of wax blend added was in a range of from about 1.3% to about 3.1%.

The cured pavers were tested for compressive strength, abrasion, water drop absorption and efflorescence. Results are shown in Table 1 below. Briefly, with the above ratios of the main wax to the secondary wax and the above ranges of the amounts of the wax blend being added, little or no efflorescence was detected, while maintaining mechanical qualities of the pavers as shown.

**Table 1**

| | Reference | Sample 1 | Sample 2 | Sample 3 |
|---|---|---|---|---|
| Density [kg/m³] | 2310 | 2292 | 2308 | 2325 |
| Wax additive [%] | 0.0 | 1.3 | 2.2 | 3.1 |
| Compressive strength [MPa] * | 53 | 52 | 54 | 53 |
| Abrasion | 4.3 | 4.9 | 4.6 | 4.5 |
| Water drop absorption time [seconds] | 1 | ∞ ** | ∞ ** | ∞ ** |
| Efflorescence appearance test *** | Positive | Negative | Negative | Negative |

| | | | | |
|---|---|---|---|---|
| • * Test according to Israel standard specification 376 • ** Water drops on samples 1, 2, 3 dried out without being absorbed in the brick surface • *** Efflorescence appearance test was conducted the following way: reference and test pavers were put in a tub containing tap water up to 10 mm below paver surface. The tub was kept outdoors in a shed for a period of 7 days. Water level of the tub was adjusted twice a day to compensate for evaporation. After 7 days the pavers were dried at ambient temperature and inspected visually for efflorescence appearance. | | | | |

### Example 2

### Additional ratios of wax blend

This example relates to tests performed with additional ratios of the main and secondary wax in the wax blend. Pavers were prepared as described above.

Standard mixtures of pavers were made from crushed limestone rock, sand, Portland cement and water. A suspension of wax blend was added in various quantities to the face mix only. The base mix was not treated. The wax blend included paraffin wax (main wax) of congealing point 45°C and montan wax (secondary wax) of congealing point 82°C. The ratio of the main wax to the secondary wax ranged was about 20:1. The actual amount of wax blend added was in a range of from about 1.0% to about 1.4%. The cured pavers were tested for compressive strength, abrasion, water drop absorption and efflorescence. Results are shown in Table 2 below. Briefly, with the above ratios of the main wax to the secondary wax and the above ranges of the amounts of the wax blend being added, little or no efflorescence was detected, while maintaining mechanical qualities of the pavers as shown.

**Table 2**

| | Reference | Sample 1 | Sample 2 |
|---|---|---|---|
| Density [kg/m³] | 2310 | 2250 | 2320 |
| Wax additive [%] | 0.0 | 1.0 | 1.4 |
| Compressive strength [MPa] * | 50.5 | 51.1 | 52.6 |
| Abrasion | 4.3 | 4.7 | 4.4 |
| Water drop absorption time [seconds] | 1 | ∞ ** | ∞ ** |
| Efflorescence appearance test | Positive | Negative | Negative |

| | | | |
|---|---|---|---|
| • * Test according to Israel standard specification 376 • ** Water drops on samples 1, 2, dried out without being absorbed in the brick surface | | | |

### Example 3

### Additional ratios of wax blend

This example relates to tests performed with additional ratios of the main and secondary wax in the wax blend. Pavers were prepared as described above.

Standard mixtures of pavers were made from crushed basalt rock, sand, Portland cement and water. A suspension of wax blend was added in various quantities to the concrete paver comprising a single layer only. The wax blend included paraffin wax (main wax) of congealing point 45°C and montan wax (secondary wax) of congealing point 79°C. The ratio of the main wax to the secondary wax ranged about 20:1 The actual amount of wax blend added was in a range of from about 1.0% to about 1.4%.

The cured pavers were tested for compressive strength, abrasion, water drop absorption and efflorescence. Results are shown in Table 3 below. Briefly, with the above ratios of the main wax to the secondary wax and the above ranges of the amounts of the wax blend being added, little or no efflorescence was detected, while maintaining mechanical qualities of the pavers as shown.

**Table 3**

| | Reference | Sample 1 | Sample 2 |
|---|---|---|---|
| Density [kg/m³] | 2220 | 2260 | 2230 |
| Wax additive [%] | 0.0 | 1.0 | 1.4 |
| Compressive strength [MPa] * | 41.7 | 48.9 | 45.5 |
| Abrasion | 4.7 | 5.1 | 4.8 |
| Water drop absorption time [seconds] | 1 | ∞ ** | ∞ ** |
| Efflorescence appearance test | Positive | Negative | Negative |

| | | | |
|---|---|---|---|
| • * Test according to Israel standard specification 376 • ** Water drops on samples 1, 2, dried out without being absorbed in the brick surface | | | |

### Example 4

### Additional ratios of wax blend

This example relates to tests performed with additional ratios of the main and secondary wax in the wax blend. Pavers were prepared as described above.

Standard mixtures of pavers were made from crushed limestone rock, sand, Portland cement and water. A suspension of wax blend was added in various quantities to the concrete paver comprising a single layer only. The wax blend included paraffin wax (main wax) of congealing point 45°C and montan wax (secondary wax) of congealing point 79°C. The ratio of the main wax to the secondary wax ranged about 20:1. The actual amount of wax blend added was in a range of from about 0.8% to about 1.2%.

The cured pavers were tested for compressive strength, abrasion, water drop absorption and efflorescence. Results are shown in Table 4 below. Briefly, with the above ratios of the main wax to the secondary wax and the above ranges of the amounts of the wax blend being added, little or no efflorescence was detected, while maintaining mechanical qualities of the pavers as shown.

**Table 4**

| | Reference | Sample 1 | Sample 2 |
|---|---|---|---|
| Density [kg/m³] | 2220 | 2240 | 2220 |
| Wax additive [%] | 0.0 | 0.8 | 1.2 |
| Compressive strength [MPa] * | 46.2 | 49.1 | 45.0 |
| Abrasion | 4.6 | 5.1 | 5.2 |
| Water drop absorption time [seconds] | 1 | ∞ ** | ∞ ** |
| Efflorescence appearance test | Positive | Negative | Negative |

| | | | |
|---|---|---|---|
| • * Test according to Israel standard specification 376 • ** Water drops on samples 1, 2, dried out without being absorbed in the brick surface | | | |

## Claims

1. A method for making a concrete shaped product more resistant to efflorescence, comprising:
forming a mixture of a wax blend with a concrete mix into a shaped product, said wax blend comprising a weight ratio of 50.01% to 99.99% of a main wax and 0.01% to 49.99% of a secondary wax.

2. The method according to claim 1, wherein the weight ratio is 75% to 99% of the main wax and 1% to 25% of the secondary wax.

3. The method according to claim 1, wherein the weight ratio is 85%-98% of the main wax and 2-15% of the secondary wax.

4. The method according to claim 1, comprising manufacturing the concrete shaped product using a base mix and a face mix, and adding said wax blend substantially just to the face mix alone.

5. The method according to claim 1, wherein the main wax comprises a macro-crystalline wax and the secondary wax comprises montan wax.

6. The method according to claim 1, wherein the main wax comprises a paraffin macro-crystalline wax and the secondary wax comprises a paraffin micro-crystalline wax.

7. The method according to claim 1, wherein said wax blend comprises at least one of: a wax emulsion of said main wax and said secondary wax and at least one emulsifier, a wax suspension that includes said main wax and said secondary wax suspended in a fluid, and a wax solution that includes said main wax and said secondary wax dissolved in a solvent.

8. The method according to claim 1, wherein the main wax comprises a soft wax with a congealing point in the range of about 10-45°C.

9. The method according to claim 1, wherein the main wax comprises a hard wax with a congealing point in the range of about 40-85°C.

10. The method according to claim 1, wherein the main wax comprises at least one of paraffin wax, bee wax, carnauba wax, candelila wax, bayberry wax, Japan wax, wax produced from a Fischer-Tropsch process, polyethylene wax, and polypropylene wax.

11. The method according to claim 1, wherein the secondary wax comprises a micro-crystalline wax with a congealing point higher than 70°C.

12. The method according to claim 1, wherein the secondary wax comprises a micro-crystalline wax with a congealing point at least 10°C higher than that of the main wax.

13. The method according to claim 1, wherein the secondary wax comprises montan wax with a congealing point in the range of about 70-95°C.

14. The method according to claim 1, wherein the secondary wax comprises at least one of peat wax, castor wax, jojoba wax, wax produced from a precipitation process, wax produced from a Fischer-Tropsch process, polyethylene wax, and polypropylene wax.

15. The method according to claim 1, wherein the wax blend has a congealing point 5-15°C above ambient temperature.

16. The method according to claim 1, wherein the wax blend has a congealing point at least 10°C below an autoclave temperature.

17. The method according to claim 1, wherein a weight ratio of the wax blend to total concrete weight is 0.1 % to 10%.

18. The method according to claim 1, wherein a weight ratio of the wax blend to total concrete weight is 0.5% to 5%.

19. A method for making a concrete shaped product more resistant to efflorescence, comprising:
making a concrete shaped product using a concrete base mix and a concrete face mix, and adding a wax substantially just to the concrete face mix alone, and curing said concrete base mix and said concrete face mix to form a concrete shaped product, wherein said wax in said concrete face mix makes said concrete shaped product more resistant to efflorescence.

20. A concrete shaped product comprising a wax blend mixed with a concrete mix that has been formed into a shaped product, said wax blend comprising a weight ratio of 50.01 % to 99.99% of a main wax and 0.01 % to 49.99% of a secondary wax.

## Patentansprüche

1. Verfahren zur Herstellung eines Betonformprodukts, das resistenter gegen Auskristallisation ist, umfassend:
Das Bilden einer Mischung aus einem Wachsgemisch in ein geformtes Produkt, wobei das genannte Wachsgemisch ein Gewlchtsverhältnls von 50,01 % bis 99,99 % eines Hauptwachses und 0,01 % bis 49,99 % eines sekundären Wachses umfasst.

2. Verfahren nach Anspruch 1, wobei das Gewlchtsverhältnis 75 % bis 99 % des Hauptwachses und 1 % bis 25 % des sekundären Wachses beträgt.

3. Verfahren nach Anspruch 1, wobei das Gewichtsverhältnis 85 % - 98 % des Hauptwachses und 2 - 15% des sekundären Wachses beträgt.

4. Verfahren nach Anspruch 1, umfassend die Herstellung eines Betonformprodukts unter Anwendung einer Grundmischung und einer Flächenmischung sowie das Hinzufügen des genannten Wachsgemisches im Wesentlichen nur allein zur Flächenmischung.

5. Verfahren nach Anspruch 1, wobei das Hauptwachs ein makrokistallines Wachs umfasst und das sekundäre Wachs ein Montanwachs umfasst.

6. Verfahren nach Anspruch 1, wobei das Hauptwachs ein makrokristallines Paraffinwachs und das sekundäre Wachs ein mikrokristallines Paraffinwachs umfasst.

7. Verfahren nach Anspruch 1, wobei das genannte Wachsgemisch wenigstens eines der nachfolgenden umfasst: eine Wachsemulsion aus dem genannten Hauptwachs und dem genannten sekundären Wachs sowie wenigstens einen Emulgator, eine Wachssuspension, die das genannte Hauptwachs und das genannte sekundäre Wachs enthält, die in einer Flüssigkeit suspendiert sind und eine Wachslösung, die das genannte Hauptwachs und das genannte sekundäre Wachs enthalten, die in einem Lösungsmittel aufgelöst sind.

8. Verfahren nach Anspruch 1, wobei das Hauptwachs ein weiches Wachs mit einem Erstarrungspunkt Im Bereich von etwa 10 - 45 °C umfasst,

9. Verfahren nach Anspruch 1, wobei das Hauptwachs ein hartes Wachs mit einem Erstarrungspunkt im Bereich von etwa 40 - 85 °C umfasst.

10. Verfahren nach Anspruch 1, wobei das Hauptwachs wenigstens eins der Paraffinwachse, Bienenwachse, Carnaubawachse, Candelilawachse, Lorbeerwachse, Japanwachse, Wachse, die aus einem Fischer-Tropsch-Prozess hergestellt sind, Polyethylenwachse und Polypropylenwachse.

11. Verfahren nach Anspruch 1, wobei das sekundäre Wachs ein mikrokristallines Wachs mit einem Erstarrungspunkt von über 70°C umfasst.

12. Verfahren nach Anspruch 1, wobei das sekundäre Wachs ein mikrokistallines Wachs mit einem Erstarrungspunkt von wenigstens 10 °C über dem des Hauptwachses umfasst.

13. Verfahren nach Anspruch 1, wobei das sekundäre Wachs Montanwachs mit einem Erstarrungspunkt Im Bereich von etwa 70-95 °C umfasst.

14. Verfahren nach Anspruch 1, wobei das sekundäre Wachs wenigstens eins der Torfwachse, Castorwachse, Jojobawachse, Wachse, die aus einem Fällungsprozess hergestellt werden, Wachse, die aus einem Flscher-Tropsch-Prozess hergestellt werden, Polyethylenwachse und Polypropylenwachse.

15. Verfahren nach Anspruch 1, wobei das Wachsgemisch einen Erstarrungspunkt von 5-15 °C über der Raumtemperatur aufweist.

16. Verfahren nach Anspruch 1, wobei das Wachsgemisch einen Erstarrungspunkt von wenigstens 10 °C unter der Autoklavtemperatur aufweist.

17. Verfahren nach Anspruch 1, wobei ein Gewlchtsverhältnls des Wachsgemisches zum Gesamt-Betongewicht 0,1 % bis 10 % beträgt.

18. Verfahren nach Anspruch 1, wobei ein Gewichtsverhältnis des Wachsgemisches zum Gesamt-Betongewicht 0,5 % bis 5 % beträgt.

19. Verfahren zur Herstellung eines Betonformprodukts, das resistenter gegen Auskristallisation ist, umfassend:
die Herstellung eines Betonformprodukts unter Anwendung einer Betongrundmischung und einer Betonflächenmischung und Hinzufügen eines Wachses im Wesentlichen nur allein zur Betonflächenmischung und Aushärten der genannten Betongrundmischung und der genannten Betonflächenmischung, um ein Betonformprodukt zu bilden, wobei das genannte Wachs in der genannten Betonflächenmischung das genannte Betonformprodukt resistenter gegen Auskristallisation macht.

20. Betonformprodukt, umfassend ein Wachsgemisch, das mit einer Betonmischung vermischt wird, die in ein Formprodukt geformt worden ist, wobei das genannte Wachsgemisch ein Gewichtsverhältnis von 50,1 % bis 99,99 % eines Hauptwachses und 0,01 % bis 49,99 % eines sekundären Wachses umfasst,

## Revendications

1. Procédé de fabrication d'un produit profilé en béton plus résistant à l'efflorescence, comprenant:
la formation d'une mixture d'un mélange de cires avec une pâte de béton en un produit profilé, ledit mélange de cires comprenant un rapport en poids de 50,01 % à 99,99 % d'une cire principale et 0,01 % à 49,99 % d'une cire secondaire.

2. Procédé selon la revendication 1, dans lequel le rapport en poids est de 75 % à 99 % de la cire principale et de 1 % à 25 % de la cire secondaire.

3. Procédé selon la revendication 1, dans lequel le rapport en poids est de 85 % à 98 % de la cire principale et de 2 % à 15 % de la cire secondaire.

4. Procédé selon la revendication 1, comprenant la fabrication du produit profilé en béton en utilisant une pâte de base et une pâte de parement, et l'addition dudit mélange de cires sensiblement uniquement à la pâte de parement.

5. Procédé selon la revendication 1, dans lequel la cire principale comprend une cire macrocristalline et la cire secondaire comprend de la cire de lignite.

6. Procédé selon la revendication 1, dans lequel la cire principale comprend une cire macrocristalline de paraffine et la cire secondaire comprend une cire microcristalline de paraffine.

7. Procédé selon la revendication 1, dans lequel ledit mélange de cires comprend au moins un élément parmi : une émulsion de cire de ladite cire principale et de ladite cire secondaire et au moins un émulsifiant, une suspension de cire qui comprend ladite cire principale et ladite cire secondaire en suspension dans un fluide, et une solution de cire qui comprend ladite cire principale et ladite cire secondaire dissoutes dans un solvant.

8. Procédé selon la revendication 1, dans lequel la cire principale comprend une cire molle avec un point de congélation dans la plage d'environ 10 à 45°C.

9. Procédé selon la revendication 1, dans lequel la cire principale comprend une cire dure avec un point de congélation dans la plage d'environ 40 à 85°C.

10. Procédé selon la revendication 1, dans lequel la cire principale comprend au moins un élément parmi la cire de paraffine, la cire d'abeilles, la cire de carnauba, la cire de candellila, la cire de baie de laurier, la cire du Japon, une cire produite par le procédé de Fischer-Tropsch, la cire de poly(éthylène) et la cire de poly(propylène).

11. Procédé selon la revendication 1, dans lequel la cire secondaire comprend une cire microcristalline avec un point de congélation supérieur à 70 °C.

12. Procédé selon la revendication 1, dans lequel la cire secondaire comprend une cire microcristalline avec un point de congélation au moins 10°C supérieur à celul de la cire principale.

13. Procédé selon la revendication 1, dans lequel la cire secondaire comprend de la cire de lignite avec un point de congélation dans la plage d'environ 70 à 95 °C.

14. Procédé selon la revendication 1, dans lequel la cire secondaire comprend au moins un élément parmi la cire de tourbe, la cire de ricin, la cire de jojoba, une cire produite par un procédé de précipitation, une cire produite par un procédé de Fischer-Tropsh, la cire de poly(éthylène) et la cire de poly(propylène).

15. Procédé selon la revendication 1, dans lequel le mélange de cires a un point de congélation de 5 à 15 °C au-dessus de la température ambiante.

16. Procédé selon la revendication 1, dans lequel le mélange de cires a un point de congélation au moins 10°C en dessous d'une température d'autoclave.

17. Procédé selon la revendication 1, dans lequel un rapport en poids entre le mélange de cires et le poids de béton total est de 0,1 % à 10 %,

18. Procédé selon la revendication 1, dans lequel un rapport en poids entre le mélange de cires et le poids de béton total est de 0,5 % à 5 %.

19. Procédé de fabrication d'un produit profilé en béton plus résistant à l'efflorescence, comprenant:
la fabrication d'un produit profilé en béton en utilisant une pâte de base de béton et une pâte de parement de béton, et l'addition d'une cire sensiblement uniquement à la pâte de parement de béton, et la prise de ladite pâte de base de béton et de ladite pâte de parement de béton pour former un produit profilé en béton, où ladite cire dans ladite pâte de parement de béton rend ledit produit profilé en béton plus résistant à l'efflorescence.

20. Produit profilé en béton comprenant un mélange de cires mélangé avec une pâte de béton qui a été formé en un produit profilé, ledit mélange de cires comprenant un rapport en poids de 50,01% à 99,99 % d'une cire principale et 0,01% à 49,99% d'une cire secondaire.
